# EUROPÄISCHE PATENTANMELDUNG

(11) **EP 3 048 599 A1**
(43) Veröffentlichungstag der Anmeldung: **27.07.2016**
(21) Anmeldenummer: 15152433.7
(22) Anmeldetag: 26.01.2015
(51) Int. Cl.: G09F 21/04, G06Q 30/02, G09F 7/18, G09F 27/00

(54) **Anzeige von Daten an Außenflächen von Kraftfahrzeugen**

(71) Anmelder: dff solutions GmbH, 37073 Göttingen (DE)
(72) Erfinder: Dossmann, Felix, 37075 Göttingen (DE)
(74) Vertreter: REHBERG HÜPPE + PARTNER

(57) **Zusammenfassung**

Zur Anzeige von Daten (9, 10) an einer Seitenfläche (4) eines Fahrzeugs (3) werden die aktuelle Position und die aktuelles Ausrichtung der Seitenfläche (4) ermittelt. Abhängig von der aktuellen Position des Fahrzeugs (3) und der aktuellen Ausrichtung der Seitenfläche (4) werden die Daten (9, 10) ausgewählt, und die ausgewählten Daten (9, 10) werden so an der Seitenfläche (4) des Fahrzeugs (3) angezeigt, dass sie für einen Betrachter des Fahrzeugs (3) von außen sichtbar sind.

## Beschreibung

### TECHNISCHES GEBIET DER ERFINDUNG

Die Erfindung bezieht sich auf ein Verfahren zur Anzeige von Daten an einer Seitenfläche eines Fahrzeugs. Insbesondere bezieht sich die Erfindung auf ein Verfahren mit den Schritten Ermitteln der aktuellen Position eines Fahrzeugs, Auswählen von Daten abhängig von der aktuellen Position des Fahrzeugs und Anzeigen der ausgewählten Daten an Seitenflächen des Fahrzeugs, so dass sie für einen Betrachter des Fahrzeugs von außen sichtbar sind. Weiterhin bezieht sich die Erfindung auf ein Fahrzeug zur Durchführung eines solchen Verfahrens mit einer Seitenfläche, einer Anzeigeeinrichtung für Daten an der Seitenfläche, so dass die Daten für einen Betrachter des Fahrzeugs von außen sichtbar sind, einer Positionsbestimmungseinrichtung, die zum Ermitteln der aktuellen Position des Fahrzeugs ausgebildet ist, und einer Steuereinrichtung, die zum Auswählen der Daten abhängig von der aktuellen Position des Fahrzeugs ausgebildet ist.

### STAND DER TECHNIK

Die DE 20 2013 000 952 U1 offenbart eine fernsteuerbare Anzeige für Warn- und Werbeinhalte auf der Rückseite von LKW mittels einer Kombination eines GPS-Ortungsmoduls mit der Möglichkeit des Datenempfangs über Funktechnik und eines oder mehrerer wetterfester Werbeträger mit der Anzeigetechnik des elektronischen Papiers. Solches elektronisches Papier wird auch E-Papier oder ePaper genannt. Das elektronische Papier ist in einem wetterfesten Rahmen eingefasst. Die resultierenden Anzeigemodule werden an den Hecktüren/-klappen von LKW verbaut. Eine Datenverbindung zu dem GPS-Ortungsmodul mit Datenempfangseinrichtung und Umwandlungsgerät zur Umwandlung der über Funk empfangenen Daten in eine auf dem elektronischen Papier abbildbaren Datei oder Grafik ermöglicht es, einen Werbeinhalt auf dem jeweiligen LKW flexibel zu verändern und zu gestalten und Standort- und zeitabhängig Werbeinhalte und Warnmeldungen zu kommunizieren. Das GPS-Ortungsmodul mit der Möglichkeit des Datenempfangs über Funktechnik übermittelt den Standort des Fahrzeugs an ein Rechenzentrum und empfängt von dort einen zeit- und ortsabhängigen Werbeinhalt oder eine Verkehrswarnung zur Darstellung auf den Anzeigemodulen.

Aus der DE 10 2008 021 013 A1 ist ein adaptives, mobiles und ferngesteuertes Werbe- und Informationssystem für die Anwendung in der Außenwerbung bekannt. Das Werbe- und Informationssystem umfasst Sendestationen und Kommunikations- und Anzeigestationen. Die Auswahl der auf einer Kommunikations- und Anzeigestation anzuzeigenden Werbung und Information sowie die Art des Anzeigens erfolgen abhängig von Umgebungsbedingungen wie Niederschlag, Temperatur, Tag/Nacht, Luftfeuchtigkeit, Windgeschwindigkeit und sonstige Wetterbedingungen, Geo-Koordinaten, Zeit-Koordinaten sowie Geschwindigkeit der jeweiligen Kommunikations- und Anzeigestation. Konkret kann die Auswahl der Werbedaten bei mobilen Werbeflächen anhand der aktuellen Geo-Koordinaten und der eigenen Geschwindigkeit, gemessen von einer integrierten GPS-Einheit, erfolgen. Mit dem beschriebenen Werbe- und Informationssystem ist ein Plakatwechsel auf mobilen Werbe- und Informationsflächen von PKW, LKW, Schiffen, Zügen usw. praktisch jederzeit an jedem Ort möglich. Ist eine Kommunikations- und Anzeigestation an einem mobilen Träger befestigt, kann sowohl die Auswahl der Inhalte als auch die Art ihrer Anzeige automatisch dem aktuellen Standort und der Bewegung des Trägers angepasst werden.

Aus der DE 10 2012 022 532 A1 ist ein tragbares Anzeigegerät zur Anzeige von Werbung mit digitalen Medieninhalten innerhalb eines Displays bekannt. Das eine handliche Größe aufweisende Anzeigegerät ist ortsungebunden und tragbar und kann mittels einer geeigneten Befestigung z. B. an Autoscheiben und anderen Flächen montiert werden. Es kommuniziert mit einem zentralen Server, von dem es anzuzeigende Inhalte erhält und dem es Quittungen für die angezeigten Inhalte übermittelt. Das Anzeigegerät übermittelt auch Orts-Koordinaten an den zentralen Server, damit dieser ortsspezifische Werbeinhalte an das Anzeigegerät übermitteln kann.

Die DE 20 2007 017 477 U1 offenbart eine automatisierte, dynamische Informationsanzeige auf dem Dach von Kraftfahrzeugen. Dabei ist ein oder sind mehrere Anzeigemedien als Informationsträger auf dem Dach installiert. Die Anzeigemedien zeigen dynamische Informationen in Form digitaler Bildinformationen von einem autarken Computer. Der Computer erhält Informationen über den Bewegungszustand des Fahrzeugs vom Tachometer und über den Standort des Fahrzeugs von einem GPS-Empfänger. Darüber hinaus können Informationen eines Personenfrequenzmessers, einer an Bord befindlichen Wetterstation und eines Taxameters über den Betriebszustand wie Fahrbetrieb oder Fahrbereitschaft an den Computer übertragen werden. Beispielsweise kann die dynamische Werbung dem Fahrtempo angepasst werden, und Inhalte können nur innerhalb bestimmter Stadtteile oder Landesteile oder nur zu bestimmten Wochen- oder Tageszeigen gezeigt werden. Zusätzlich speichert der Computer diese Informationen in Zusammenhang mit der gezeigten Werbebotschaft, um dem Auftraggeber eine Referenz zu geben.

Aus der DE 20 2014 006 917 U1 ist eine Vorrichtung zum mobilen Betrieb von Gefahrenhinweisen im Straßenverkehr bekannt. Konkret werden Leuchtdioden auf LKW-Planen, Aufliegern, Fahrzeugen bzw. mobilen Geräten zur Anzeige von Informationen verwendet. Wenn aktuell kein Gefahrenhinweis vorhanden ist, so erscheint Werbung.

### AUFGABE DER ERFINDUNG

Der Erfindung liegt die Aufgabe zugrunde, ein Verfahren zur Anzeige von Daten an einer Seitenfläche eines Fahrzeugs und ein Fahrzeug zur Durchführung eines solchen Verfahrens aufzuzeigen, bei denen die angezeigten Daten mit so hoher Selektivität ausgewählt werden, dass sie eine erhöhte Aufmerksamkeit erzielen. So soll beispielsweise die Wirkung von Werbung auf einen externen Betrachter der Seitenfläche des Fahrzeugs maximiert werden.

### LÖSUNG

Die Aufgabe der Erfindung wird durch ein Verfahren mit den Merkmalen des unabhängigen Patentanspruchs 1 und durch ein Fahrzeug mit den Merkmalen des nebengeordneten Patentanspruchs 11 gelöst. Bevorzugte Ausführungsformen des erfindungsgemäßen Verfahrens und des erfindungsgemäßen Fahrzeugs sind in den abhängigen Patentansprüchen definiert.

### BESCHREIBUNG DER ERFINDUNG

Bei einem erfindungsgemäßen Verfahren zur Anzeige von Daten an einer Seitenfläche eines Fahrzeugs mit den Schritten: (i) Ermitteln der aktuellen Position des Fahrzeugs, (ii) Auswählen der Daten abhängig von der aktuellen Position des Fahrzeugs und (iii) Anzeigen der ausgewählten Daten an der Seitenfläche des Fahrzeugs, so dass sie für einen Betrachter des Fahrzeugs von außen sichtbar sind, wird zusätzlich die aktuelle Ausrichtung der Seitenfläche ermittelt und werden die Daten zusätzlich abhängig von der aktuellen Ausrichtung der Seitenfläche zur Anzeige an der Seitenfläche ausgewählt.

Indem die Ausrichtung der Seitenfläche neben der Position des Fahrzeugs bei der Auswahl der anzuzeigenden Daten berücksichtigt wird, können die anzuzeigenden Daten optimal auf die aktuelle Ausrichtung der Seitenfläche abgestimmt werden, an der sie angezeigt werden. So können die Daten relative Angaben zu einem in der Nähe des Fahrzeugs befindlichen Ort enthalten. Diese Daten können z. B. Aufforderungen an den Betrachter umfassen, sich zu einem Ort umzudrehen, oder einem Ort Aufmerksamkeit zu widmen, der auf der dem Betrachter gegenüberliegenden Seite des Fahrzeugs liegt. Allein die Tatsache, dass die Daten auf die Ausrichtung der Seitenfläche, an der sie angezeigt werden, abgestimmt sind, erregt beim Betrachter erhebliche Aufmerksamkeit. Er ist insbesondere über angezeigte relative Ortsangaben überrascht, und diese Überraschung erweckt sein Interesse.

Wie bei dem erfindungsgemäßen Verfahren die aktuelle Position des Fahrzeugs und die aktuelle Ausrichtung der Seitenfläche ermittelt werden, ist für die vorliegende Erfindung nicht von besonderer Bedeutung. Alle bekannten Systeme zur Ermittlung der Position eines Fahrzeugs können Anwendung finden. Zudem kann unter Berücksichtigung, ob das Fahrzeug zuletzt vorwärts oder rückwärts gefahren ist, aus der Historie seiner letzten Positionen die aktuelle Ausrichtung des Fahrzeugs bestimmt werden, wobei die aktuelle Ausrichtung des Fahrzeugs mit seiner Fahrtrichtung beim geradeaus vorwärts Fahren gleichgesetzt werden kann. Es kann aber auch ein Sensor für die absolute Ausrichtung des Fahrzeugs vorhanden sein. Ein solcher Sensor kann bei einem längeren Fahrzeug beispielsweise zwei Positionssensoren vorne und hinten an dem Fahrzeug umfassen. Die Differenz der mit diesen Positionssensoren bestimmten Positionen ist die gesuchte Ausrichtung des Fahrzeugs. Von der Ausrichtung des Fahrzeugs ist die interessierende Ausrichtung der Seitenfläche, auf der die Anzeige der Daten erfolgt, direkt ableitbar ist, da zumindest die Ausrichtung jeder festen Seitenfläche des Fahrzeugs in einer festen Beziehung zu der aktuellen Ausrichtung des Fahrzeugs steht.

Grundsätzlich kann bei dem erfindungsgemäßen Verfahren zusätzlich zu der Position des gesamten Fahrzeugs auch die relative Position der Seitenfläche an dem Fahrzeug oder direkt die genaue Position der jeweiligen Seitenfläche des Fahrzeugs bei der Auswahl der Daten berücksichtigt werden. Auch dies fällt hier unter die allgemeinere Angabe, dass die Daten abhängig von der Position des Fahrzeugs, das die jeweilige Seitenfläche umfasst, ausgewählt werden.

Bei den ausgewählten Daten kann es sich um Textdaten handeln, die zur Anzeige in Bilddaten umgesetzt werden. Es kann sich auch direkt um Bilddaten handeln. Die Inhalte der Daten können neben Werbung beispielsweise auch Hinweise auf Orte von touristischer Bedeutung, Warnhinweise oder jede andere Art von Hinweisen umfassen.

Die Anzeige der ausgewählten Daten an der Seitenfläche des Fahrzeugs kann bei der vorliegenden Erfindung auf mannigfaltige Weise geschehen. So kann eine geeignete Anzeigeeinrichtung, wie beispielsweise ein elektronisches Papier, außen auf der Seitenfläche des Fahrzeugs angebracht werden. Bei einer durchsichtigen Seitenfläche des Fahrzeugs, wie beispielsweise einer Seitenscheibe, kann ein Display aber auch hinter dieser Scheibe angeordnet werden. Ebenso ist es möglich, dass eine Seitenfläche des Fahrzeugs keinen Innenraum des Fahrzeugs begrenzt, sondern ausschließlich zur Anzeige der Daten dient, indem sie beispielsweise von einer auf dem Dach des Fahrzeugs installierten Konstruktion bereitgestellt wird. An der Seitenfläche des Fahrzeugs können auch mehrere Anzeigeeinrichtungen für unterschiedliche Daten angeordnet sein. Eine einzige Anzeigeeinrichtung kann aber ebenso aus einer Mehrzahl kleinerer Anzeigeeinrichtungen zusammengesetzt sein, um die Daten über eine größere Fläche hinweg anzuzeigen.

Insbesondere werden bei dem erfindungsgemäßen Verfahren Daten an zwei in einander entgegengesetzte Richtungen weisenden Seitenflächen des Fahrzeugs angezeigt, und zwar unterschiedliche, jeweils abhängig von der Position des Fahrzeugs und der Ausrichtung der jeweiligen Seitenfläche ausgewählte Daten, weil die Ausrichtung der beiden Seitenflächen unterschiedlich ist. Beispielsweise können die Daten, die an der einen Seitenfläche angezeigt werden, den Betrachter auffordern, sich zu einem bestimmten Ort in der Umgebung des Fahrzeugs umzudrehen, während die Daten, die auf der anderen Seitenfläche angezeigt werden, den Betrachter auffordern, die Straße zu überqueren, um zu demselben Ort zu gelangen.

Die Daten, die bei dem erfindungsgemäßen Verfahren an der jeweiligen Seitenfläche des Fahrzeugs angezeigt werden, sind spezielle, auf die Ausrichtung dieser Seitenfläche gegenüber einem externen Betrachter abgestimmte Daten. Es handelt sich insbesondere nicht um Daten, wie sie von einem Navigationssystem bereitgestellt werden und die ein Wegenetz in der Umgebung der aktuellen Position des Fahrzeugs beschreiben.

Die Auswahl der Daten zur Anzeige auf der jeweiligen Seitenfläche des Fahrzeugs kann neben der Position des Fahrzeugs und der Ausrichtung dieser Seitenfläche von weiteren Informationen abhängig gemacht werden. So können Funkdaten empfangen werden, die von mobilen Geräten in der Nähe des Fahrzeugs ausgesandt werden, und die Daten können abhängig von einem Inhalt und/oder einem Umfang der Funkdaten zur Anzeige an der Seitenfläche ausgewählt werden. Bei den Funkdaten kann es sich um Mobilfunkdaten oder Funkdaten zur Kommunikation in einem WLAN oder einem anderen lokalen Kommunikationsnetz, beispielsweise sogenannte Beacons, handeln. Der Umfang der Funkdaten gibt bei der mittlerweile hohen Wahrscheinlichkeit, dass jeder ein Mobilfunkgerät mit sich führt, die Wahrscheinlichkeit an, dass sich potentielle Betrachter der an der jeweiligen Seitenfläche angezeigten Daten in der Nähe des Fahrzeugs befinden und wieviel dies sind. Bei einer richtungsabhängigen Erfassung der Funkdaten können diese auch einer von mehreren Seitenflächen des Fahrzeugs für die Auswahl der dort anzuzeigenden Daten zugeordnet werden. Inhalte der Funkdaten, die insbesondere aus den sogenannten Beacons entnommen werden können, sind beispielsweise solche, die Aufschluss über Interessen des Besitzers des mobilen Geräts geben. Diese Informationen können genutzt werden, um die Daten für die Anzeige so auszuwählen, dass sie Werbeinhalte umfassen, die auf den Besitzer des mobilen Geräts zugeschnitten sind.

Bei dem erfindungsgemäßen Verfahren können auch dem Fahrzeug seitlich benachbarte Objekte und/oder Abstände zu dem Fahrzeug seitlich benachbarten Objekten ermittelt und die Daten abhängig von den Objekten und/oder den Abständen zur Anzeige an der Seitenfläche ausgewählt werden. Bei den benachbarten Objekten, deren Anwesenheit und/oder Abstände zu dem Fahrzeug ermittelt werden, kann es sich um Personen, d. h. potentielle Betrachter der Seitenflächen des Fahrzeugs, handeln. Diese können z. B. mit einer Wärmebild- oder Infrarotkamera und einer einfachen Bildverarbeitung erfasst werden. Umgekehrt kann dann auf eine Anzeige von Daten verzichtet werden, wenn ermittelt wird, dass sich ein großes Objekt direkt seitlich neben dem Fahrzeug befindet, so dass eine auf der dem Objekt zugekehrten Seitenfläche erfolgende Anzeige von Daten für keinen externen Betrachter sichtbar wäre. Zumindest kann bei dem erfindungsgemäßen Verfahren bei einer Quittierung der angezeigten Daten Berücksichtigung finden, dass die Anzeige möglicherweise verdeckt war, ebenso wie Berücksichtigung finden kann, ob potentiell wenig oder sogar potentiell besonders viele Betrachter in der Nähe des Fahrzeugs und insbesondere vor der Seitenfläche standen, als die Daten angezeigt wurden. Basierend auf diesen detaillierten Quittungen kann an der Seitenfläche angezeigte Werbung dem Auftraggeber der Werbung abhängig von ihrem tatsächlichen Wert in Rechnung gestellt werden.

Weiterhin kann erfasst werden, wie viele Male bestimmte Daten bereits angezeigt wurden, und die Daten können abhängig von der Anzahl von Malen zur Anzeige an der Seitenfläche ausgewählt werden. Beispielsweise kann eine bestimmte Werbung nur eine begrenzte Anzahl von Malen angezeigt werden, und zwar entweder von dem jeweiligen Fahrzeug oder auch von einer Vielzahl von Fahrzeugen. Wenn die begrenzte Anzahl von Malen erschöpft oder ein damit korreliertes Werbebudget ausgeschöpft ist, kann eine andere Werbung oder können irgendwelche anderen Daten angezeigt werden.

Weiterhin kann das Wetter an der Position des Fahrzeugs ermittelt werden, und die Daten zur Anzeige an der Seitenfläche können abhängig von dem Wetter ausgewählt werden. Beispielsweise kann bei starkem Regen statt Werbung für einen Biergarten Werbung für ein Schirmgeschäft ausgewählt werden, oder bei heißem Wetter kann Werbung für ein Eiscafe ausgewählt werden, während bei kaltem Wetter Werbung für einen Straßenverkauf von Heißgetränken ausgewählt wird. Das Ermitteln des Wetters kann sich dabei konkret auf einen oder mehrere Aspekte des Wetters, wie Temperatur, Niederschlag, Luftfeuchtigkeit oder Windgeschwindigkeit, beziehen.

Die Daten für die Anzeige an der Seitenfläche können auch abhängig von dem Zeitpunkt und/oder der Tageszeit und/oder dem Wochentag und/oder dem Monat und/oder der Jahreszeit zur Anzeige an der Seitenfläche ausgewählt werden. So ist es wenig sinnvoll, Werbung für momentan geschlossene Geschäfte anzuzeigen oder für Speisen- oder Getränkeangebote, die der aktuellen Tageszeit nicht entsprechen. Bestimmte Werbung wird auch am Wochenende oder im Winter wirksamer sein als in der Woche oder im Frühjahr oder umgekehrt. Häufig werden aber die Daten, aus denen diejenigen zur Anzeige auf der jeweiligen Seitenfläche ausgewählt werden, einen hohen Aktualitätsgrad aufweisen. So werden diese Daten häufig für einen kürzeren Zeitraum als einen Monat oder auch als eine Woche vorgehalten werden. Entsprechend wird vorgehaltene Werbung immer bereits an die aktuelle Saison angepasst sein. Wenn jedoch die Daten, aus denen die Auswahl erfolgt, in einer Datenbank gespeichert sind, die auf dem Fahrzeug installiert ist, so dass das Aktualisieren der Datenbank mit gewissem Aufwand verbunden ist, können die Daten auch für einen längeren Zeitraum vorgehalten werden.

Vorzugsweise werden die Daten bei dem erfindungsgemäßen Verfahren jedoch aus einer externen Datenbank ausgewählt, mit der von dem Fahrzeug drahtlos kommuniziert wird. Diese externe Datenbank ist insbesondere eine zentrale Datenbank für eine Vielzahl von Fahrzeugen. Eine solche externe Datenbank kann dann besonders einfach für alle Fahrzeuge aktualisiert werden. So kann über eine solche Datenbank, an die die Anzeige bestimmter Daten von den Fahrzeugen - vorzugsweise unter Angabe der Umstände der Anzeige - zurückgemeldet wird, durch fortlaufende Aktualisierung berücksichtigen, ob das Werbebudget für bestimmte Werbung bereits aufgebraucht ist. Die entsprechenden Daten können dann aus der Datenbank entfernt werden. Auch die Abrechnung für die Anzeige der Daten gegenüber denjenigen, die die Anzeige der Daten beauftragt haben, ist mit Hilfe einer solchen zentralen Datenbank, an die die Anzeige der Daten zurückgemeldet wird, einfach.

Die drahtlose Kommunikation zwischen dem Fahrzeug und der externen Datenbank kann gemäß irgendeinem geeigneten Standard erfolgen. Häufig wird die Kommunikation über Mobilfunk erfolgen. Aus Gründen der Manipulationssicherheit kann die Kommunikation über geschützte Mobilfunkverbindungen erfolgen.

Ein erfindungsgemäßes Fahrzeug zur Durchführung des erfindungsgemäßen Verfahrens mit einer Seitenfläche, einer Anzeigeeinrichtung für Daten an der Seitenfläche, so dass die Daten für einen Betrachter des Fahrzeugs von außen sichtbar sind, einer Positionsbestimmungseinrichtung, die zum Ermitteln der aktuellen Position des Fahrzeugs ausgebildet ist, und einer Steuereinrichtung, die zum Auswählen der Daten abhängig von der aktuellen Position des Fahrzeugs ausgebildet ist, weist zusätzlich eine Ausrichtungsbestimmungseinrichtung auf, die zum Ermitteln der aktuellen Ausrichtung der Seitenfläche ausgebildet ist, und die Steuereinrichtung ist ausgebildet, um die Daten abhängig auch von der Ausrichtung der Seitenfläche auszuwählen. Die Ausbildung der Steuereinrichtung, um die Daten abhängig sowohl von der aktuellen Position als auch von der aktuellen Ausrichtung der Seitenfläche auszuwählen, kann sich darauf beschränken, die Position und die Ausrichtung des Fahrzeugs sowie die Relativlage der Seitenfläche, z. B. "rechts" oder "links", bei der Anfrage nach den anzuzeigenden Daten bei einer Datenbank anzugeben.

Vorzugsweise weist das erfindungsgemäße Fahrzeug an einer in eine der Seitenfläche entgegengesetzte Richtung weisenden weiteren Seitenfläche des Fahrzeugs eine weitere Anzeigevorrichtung auf, und die Steuereinrichtung ist ausgebildet, um unterschiedliche, abhängig von der Position und der Ausrichtung der jeweiligen Seitenfläche ausgewählte Daten auf der Anzeigeeinrichtung und der weiteren Anzeigeeinrichtung anzuzeigen.

Um zusätzliche Informationen zu erlangen, die bei der Auswahl der Daten zur Anzeige auf der oder den Seitenflächen sinnvollerweise zusätzlich berücksichtigt werden, kann das Fahrzeug einen Empfänger aufweisen, der ausgebildet ist, um von mobilen Geräten in der Nähe des Fahrzeugs ausgesandte Funkdaten zu empfangen, und/oder eine Sensoreinrichtung, die ausgebildet ist, um dem Fahrzeug seitlich benachbarte Objekte und/oder Abstände zu dem Fahrzeug seitlich benachbarten Objekten zu ermitteln. Die Sensoreinrichtung zum Ermitteln der Anwesenheit und/oder des Abstands von dem Fahrzeug seitlich benachbarten Objekten können eine Wärmebild- oder Infrarotkamera umfassen, mit der festgestellt wird, ob sich Personen und damit potentielle Betrachter der Seitenflächen des Fahrzeugs neben dem Fahrzeug befinden. Die Steuereinrichtung ist dann entsprechend ausgebildet, um die anzuzeigenden Daten abhängig von einem Inhalt und/oder einem Umfang der Funkdaten bzw. von den Objekten und/oder den Abständen auszuwählen. Auch dies geschieht typischerweise dadurch, dass die Steuereinrichtung bei der Anfrage der Daten bei einer Datenbank die entsprechenden Informationen zusätzlich zu der Position und der Ausrichtung der jeweiligen Seitenfläche angibt. In der Regel ist die Steuereinrichtung des erfindungsgemäßen Fahrzeugs ausgebildet, um drahtlos mit einer externen Datenbank zu kommunizieren, um einerseits die Daten auszuwählen und um andererseits die Anzeige der Daten zu quittieren.

Die Anzeigeeinrichtung an der oder den Seitenflächen des Fahrzeugs kann ein sogenanntes elektronisches Papier sein, weil dieses vergleichsweise leicht ist und einen vergleichsweise geringen Energiebedarf hat. Die Anzeigeeinrichtung kann aber auch aus einer Vielzahl von LED, einem oder mehreren ein- oder mehrfarbigen LCD-Displays oder dergleichen bestehen oder diese zumindest als Bestandteile aufweisen. Zum Beispiel kann die Anzeigeeinrichtung neben einem elektronischen Papier oder einem LCD-Display für einen Teil der anzuzeigenden Daten zusätzliche Leuchtdioden aufweisen. Ein helles Blinken dieser zusätzlichen Leuchtdioden kann die Aufmerksamkeit eines Betrachters auf die auf dem Display angezeigten Daten lenken. Wie diese LED konkret angesteuert werden, kann Teil der anzuzeigenden Daten sein. Grundsätzlich kann die Anzeigeeinrichtung auch mit einem oder mehreren Lautsprechern kombiniert sein, um neben optischen auch akustische Botschaften, insbesondere Werbebotschaften, auszusenden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Sensor die Rede ist, ist dies so zu verstehen, dass genau ein Sensor, zwei Sensoren oder mehr Sensoren vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: skizziert ein erfindungsgemäßes Fahrzeug in einer Seitenansicht (a) und einer Rückansicht (b).
- **Fig. 2**: skizziert ein weiteres erfindungsgemäßes Fahrzeug in einer Seitenansicht (a) und einer Rückansicht (b); und
- **Fig. 3**: illustriert schematisch die Funktion eines erfindungsgemäßen Fahrzeugs und den Ablauf eines erfindungsgemäßen Verfahrens.

### FIGURENBESCHREIBUNG

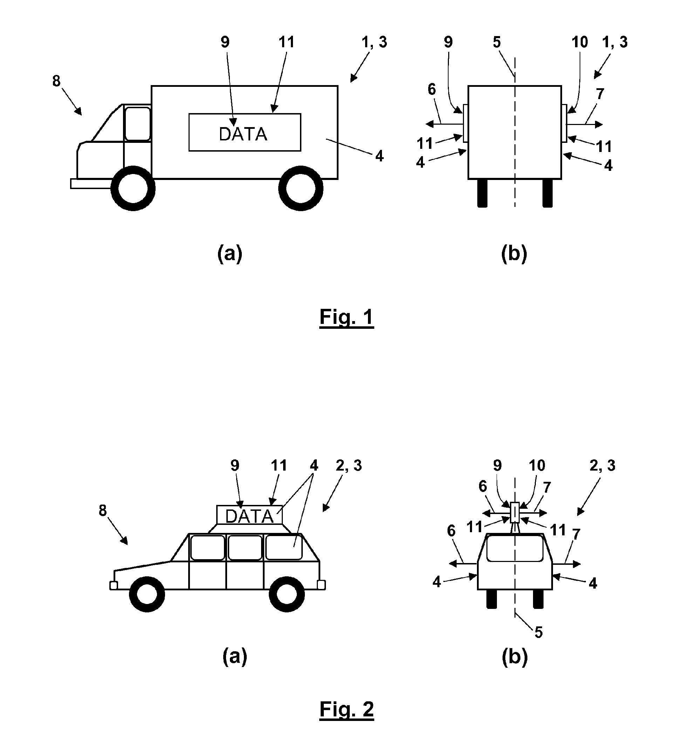

Fig. 1 zeigt einen Lastkraftwagen 1 und Fig. 2 zeigt ein Personenkraftfahrzeug 2 als Beispiele für erfindungsgemäße Fahrzeuge 3. Das jeweilige Fahrzeug 3 weist Seitenflächen 4 auf beiden Seiten seiner vertikalen Längsmittelebene 5 auf, die in einander entgegengesetzte Richtungen 6 und 7 weisen. Wohin die Richtungen 6 und 7 absolut zeigen, hängt dabei von der aktuellen Position des jeweiligen Fahrzeugs 3 und seiner Ausrichtung, d. h. der Richtung seiner Längsmittelebene 5 und wohin dabei das vordere Ende 8 des Fahrzeugs zeigt, ab. Bei dem erfindungsgemäßen Fahrzeug 3 werden die aktuelle Position und die Ausrichtung des Fahrzeugs 3 ermittelt, um an mindestens einer der Seitenflächen 4, insbesondere an zwei in die unterschiedlichen Richtungen 6 und 7 weisenden Seitenflächen 4, Daten 9 bzw. 10 anzuzeigen, die abhängig von der Position und der Ausrichtung des Fahrzeugs 3 ausgewählt werden. Bei dieser Auswahl wird neben der Ausrichtung des Fahrzeugs 3 die relative Ausrichtung der jeweiligen Seitenfläche 4 in der Richtung 6 oder 7 berücksichtigt, beispielsweise mit der Angabe, ob sich die Seitenfläche links oder rechts an dem Fahrzeug 3 befindet. Insbesondere handelt es sich bei den Daten 9, 10 um Werbung, die auf die Position des Fahrzeugs und die

Ausrichtung der jeweiligen Seitenfläche 4 abgestimmt ist. Zur Anzeige der Daten 9, 10 an der jeweiligen Seitenfläche 4 ist eine Anzeigeeinrichtung 11 vorgesehen, bei der es sich um ein zusammenhängendes Display oder mehrere zusammengesetzte Displays verschiedenster Technologie handeln kann. Die Daten 9, 10 werden unter Berücksichtigung der Position des Fahrzeugs 3 und der Ausrichtung der jeweiligen Seitenfläche 4 aus einer Datenbank ausgewählt. Dabei können weitere Informationen zu der Umgebung des Fahrzeugs 3 Berücksichtigung finden.

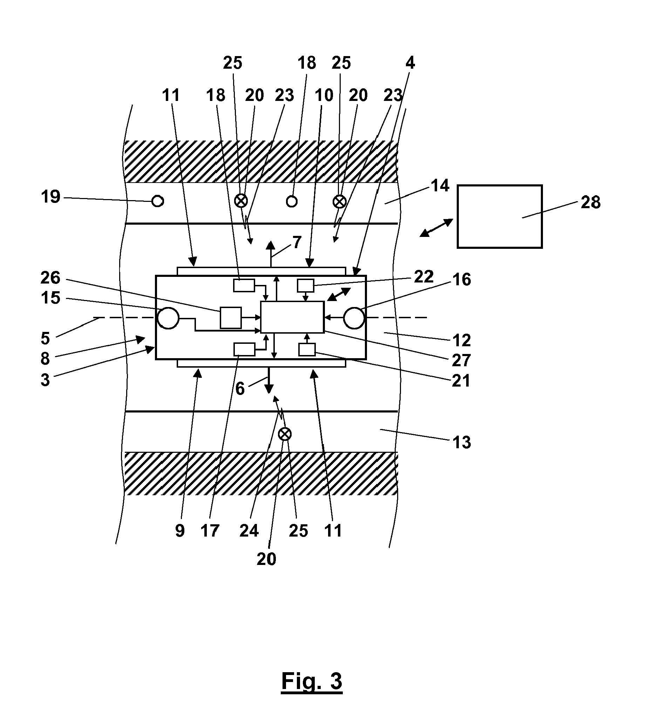

Fig. 3 zeigt in einer Ansicht von oben sehr schematisch ein erfindungsgemäßes Fahrzeug 3 auf einer Fahrbahn 12, die durch seitliche Bürgersteige 13 und 14 begrenzt ist. Dabei sind die für die hier wesentlichen Bestandteile des Fahrzeugs 3 schematisch dargestellt. Diese umfassen neben den Anzeigeeinrichtungen 11 auf den in die Richtungen 6 und 7 weisenden Seitenflächen 4 des Fahrzeugs 3 zwei Positionssensoren 15 und 16. Mit den Positionssensoren 15 und 16 ist nicht nur die Position des Fahrzeugs 3 ermittelbar, sondern auch dessen Ausrichtung, weil die Positionssensoren 15 und 16 in Richtung der Längsmittelebene 5 beabstandet sind, wobei der Positionssensor 15 hier am vorderen Ende 8 des Fahrzeugs liegt. Die Differenz der Positionen, die mit den Positionssensoren 15 und 16 ermittelt wird, ist die Ausrichtung des Fahrzeugs 3, während eine oder der Mittelwert der Positionen die Position des Fahrzeugs 3 ist.

Mit Infrarotkameras 17 und 18 wird erfasst, ob sich in den Richtungen 6 und 7 Personen 19, 20 vor den Anzeigeeinrichtungen 11 befinden. Alternativ oder zusätzlich sind Empfänger 21, 22 für Funkdaten 23, 24 vorgesehen, die von mobilen Geräten 25 ausgesandt werden, welche die Personen 20 mit sich führen. Dabei sind die Funkdaten 23 hier unspezifische Funkdaten, die nur die Anwesenheit eines mobilen Geräts 25 anzeigen, während die Funkdaten 24 genauere Informationen zu der das aussendende Gerät 25 mit sich führenden Person 20 enthalten. Weiterhin ist eine Wetterstation 26 auf dem Fahrzeug 3 vorgesehen. Die Informationen von den Positionssensoren 15 und 16, von den Infrarotkameras 17 und 18, von den Empfängern 21 und 22 und von der Wetterstation 26 werden von einer Steuereinrichtung 27 berücksichtigt, wenn sie die Daten 9, 10 für die Anzeige an den Seitenflächen 4 drahtlos bei einer externen Datenbank 28 anfragt. Die dann zur Anzeige zurück erhaltenen Daten 9, 10 sind spezifisch auf die Situation in den Richtungen 6 und 7 vor den Anzeigeeinrichtungen 11 abgestimmt. Zudem lässt sich bei Anzeige von Werbung als die Daten 9 und 10 aus der jeweiligen Situation vor den Anzeigeeinrichtungen 11 auf den Wert der Anzeige der Werbung schließen. Dieser Wert kann in der Datenbank 28 protokolliert werden kann, um bei der Abrechnung der Werbung gegenüber deren Auftraggeber als Berechnungsgrundlage zu dienen.

### BEZUGSZEICHENLISTE

- 1: Lastkraftwagen
- 2: Personenkraftwagen
- 3: Fahrzeug
- 4: Seitenfläche
- 5: Längsmittelebene
- 6: Richtung
- 7: Richtung
- 8: vorderes Ende
- 9: Daten
- 10: Daten
- 11: Anzeigeeinrichtung
- 12: Fahrbahn
- 13: Bürgersteig
- 14: Bürgersteig
- 15: Positionssensor
- 16: Positionssensor
- 17: Infrarotkamera
- 18: Infrarotkamera
- 19: Person
- 20: Person
- 21: Empfänger
- 22: Empfänger
- 23: Funkdaten
- 24: Funkdaten
- 25: mobiles Gerät
- 26: Wetterstation
- 27: Steuereinrichtung
- 28: Datenbank

## Patentansprüche

1. Verfahren zur Anzeige von Daten (9, 10) an einer Seitenfläche (4) eines Fahrzeugs (3) mit den Schritten:
- Ermitteln der aktuellen Position des Fahrzeugs (3),
- Auswählen der Daten (9, 10) abhängig von der aktuellen Position des Fahrzeugs (3) und
- Anzeigen der ausgewählten Daten (9, 10) an der Seitenfläche (4) des Fahrzeugs (3), so dass sie für einen Betrachter des Fahrzeugs (3) von außen sichtbar sind,
**dadurch gekennzeichnet, dass** die aktuelle Ausrichtung der Seitenfläche (4) ermittelt wird und dass die Daten (9, 10) abhängig von der aktuellen Ausrichtung der Seitenfläche (4) zur Anzeige an der Seitenfläche (4) ausgewählt werden.

2. Verfahren nach Anspruch 1, **dadurch gekennzeichnet, dass** an der Seitenfläche (4) und an einer in eine entgegengesetzte Richtung (7) weisenden Seitenfläche (4) des Fahrzeugs (3) unterschiedliche, abhängig von der aktuellen Position des Fahrzeugs (3) und der aktuellen Ausrichtung der jeweiligen Seitenfläche (4) ausgewählte Daten (9, 10) angezeigt werden.

3. Verfahren nach einem der vorhergehenden Ansprüche, **dadurch gekennzeichnet, dass** die aktuelle Position des Fahrzeugs (3) bestimmt und daraus die aktuelle Ausrichtung der jeweiligen Seitenfläche (4) ermittelt wird.

4. Verfahren nach einem der vorhergehenden Ansprüche, **dadurch gekennzeichnet, dass** von mobilen Geräten (25) in der Nähe des Fahrzeugs (3) ausgesandte Funkdaten (23, 24) empfangen werden und dass die Daten abhängig von einem Inhalt und/oder einem Umfang der Funkdaten (23, 24) zur Anzeige an der Seitenfläche (4) ausgewählt werden.

5. Verfahren nach einem der vorhergehenden Ansprüche, **dadurch gekennzeichnet, dass** dem Fahrzeug (3) seitlich benachbarte Objekte und/oder Abstände zu dem Fahrzeug (3) seitlich benachbarten Objekten ermittelt werden und dass die Daten (9, 10) abhängig von den Objekten und/oder den Abständen zur Anzeige an der Seitenfläche (4) ausgewählt werden.

6. Verfahren nach einem der vorhergehenden Ansprüche, **dadurch gekennzeichnet, dass** erfasst wird, wie viele Male bestimmte Daten (9, 10) bereits angezeigt werden, und dass die Daten (9, 10) abhängig von der Anzahl von Malen zur Anzeige an der Seitenfläche (4) ausgewählt werden.

7. Verfahren nach einem der vorhergehenden Ansprüche, **dadurch gekennzeichnet, dass** das Wetter an der Position des Fahrzeugs (3) ermittelt wird und dass die Daten (9, 10) abhängig von dem Wetter zur Anzeige an der Seitenfläche (4) ausgewählt werden.

8. Verfahren nach einem der vorhergehenden Ansprüche, **dadurch gekennzeichnet, dass** die Daten (9, 10) abhängig von dem Zeitpunkt und/oder der Tageszeit und/oder dem Wochentag und/oder dem Monat und/oder der Jahresszeit zur Anzeige an der Seitenfläche (4) ausgewählt werden.

9. Verfahren nach einem der vorhergehenden Ansprüche, **dadurch gekennzeichnet, dass** die Daten (9, 10) aus einer Datenbank ausgewählt werden, die auf dem Fahrzeug (3) installiert ist.

10. Verfahren nach einem der Ansprüche 1 bis 8, **dadurch gekennzeichnet, dass** die Daten (9, 10) aus einer externen Datenbank (28) ausgewählt werden, mit der drahtlos kommuniziert wird.

11. Fahrzeug (3) zur Durchführung des Verfahrens nach einem der vorhergehenden Ansprüche, mit
- einer Seitenfläche (4),
- einer Anzeigeeinrichtung (11) für Daten (9, 10) an der Seitenfläche (4), so dass die Daten (9, 10) für einen Betrachter des Fahrzeugs (3) von außen sichtbar sind,
- einer Positionsbestimmungseinrichtung, die zum Ermitteln der aktuellen Position des Fahrzeugs (3) ausgebildet ist, und
- einer Steuereinrichtung (27), die zum Auswählen der Daten (9, 10) abhängig von der aktuellen Position des Fahrzeugs (3) ausgebildet ist,
**dadurch gekennzeichnet, dass** eine Ausrichtungsbestimmungseinrichtung vorgesehen ist, die zum Ermitteln der aktuellen Ausrichtung der Seitenfläche (4) ausgebildet ist, und dass die Steuereinrichtung (27) ausgebildet ist, um die Daten (9, 10) abhängig von der aktuellen Ausrichtung der Seitenfläche (4) auszuwählen.

12. Fahrzeug (3) nach Anspruch 11, **dadurch gekennzeichnet, dass** an einer in eine der Seitenfläche (4) entgegengesetzte Richtung (7) weisenden weiteren Seitenfläche (4) des Fahrzeugs (3) eine weitere Anzeigeeinrichtung (11) vorgesehen ist und dass die Steuereinrichtung (27) ausgebildet ist, um unterschiedliche, abhängig von der Position des Fahrzeugs (3) und der Ausrichtung der jeweiligen Seitenfläche (4) ausgewählte Daten (9, 10) auf der Anzeigeeinrichtung (11) und der weiteren Anzeigeeinrichtung (11) anzuzeigen.

13. Fahrzeug (3) nach Anspruch 11 oder 12, **dadurch gekennzeichnet, dass** ein Empfänger (21, 22) vorgesehen ist, der ausgebildet ist, um von mobilen Geräten (25) in der Nähe des Fahrzeugs (3) ausgesandte Funkdaten (23, 24) zu empfangen, und dass die Steuereinrichtung (27) ausgebildet ist, um die Daten (9, 10) abhängig von einem Inhalt und/oder einem Umfang der Funkdaten (23, 24) zur Anzeige an der Seitenfläche (4) auszuwählen.

14. Fahrzeug (3) nach einem der Ansprüche 11 bis 13, **dadurch gekennzeichnet, dass** eine Sensoreinrichtung vorgesehen ist, die ausgebildet ist, um dem Fahrzeug (3) seitlich benachbarte Objekte und/oder Abstände zu dem Fahrzeug (3) seitlich benachbarten Objekten zu ermitteln, und dass die Steuereinrichtung (27) ausgebildet ist, um die Daten (9, 10) abhängig von den Objekten und/oder den Abständen zur Anzeige an der Seitenfläche (4) auszuwählen.

15. Fahrzeug (3) nach einem der Ansprüche 11 bis 13, **dadurch gekennzeichnet, dass** die Steuereinrichtung (27) dazu ausgebildet ist, drahtlos mit einer externen Datenbank (28) zu kommunizieren, um die Daten (9, 10) auszuwählen.

## Geänderte Patentansprüche

### Geänderte Patentansprüche gemäss Regel 137(2) EPÜ.

1. Verfahren zur Anzeige von Daten (9, 10) an in einander entgegengesetzte Richtungen (6 und 7) weisenden Seitenflächen (4) eines Fahrzeugs (3) mit den Schritten:
- Ermitteln der aktuellen Position des Fahrzeugs (3),
- Ermitteln der aktuellen Ausrichtung des Fahrzeugs (3), die beim geradeaus vorwärts Fahren gleich seiner Fahrtrichtung ist,
- Auswählen der Daten (9, 10) abhängig von der aktuellen Position und der aktuellen Ausrichtung des Fahrzeugs (3) und
- Anzeigen der ausgewählten Daten (9, 10) an den Seitenflächen (4) des Fahrzeugs (3), so dass sie für einen Betrachter des Fahrzeugs (3) von außen sichtbar sind,
**dadurch gekennzeichnet,**
- **dass** die Daten (9, 10) zur Anzeige an der jeweiligen Seitenfläche (4) abhängig davon ausgewählt werden, ob sich die jeweilige Seitenfläche (4) links oder rechts an dem Fahrzeug (3) befindet,
- wobei an der in der einen Richtung (6) weisenden Seitenfläche (4) und der in der entgegengesetzten Richtung (7) weisenden Seitenfläche (4) des Fahrzeugs (3) unterschiedliche Daten (9, 10) angezeigt werden.

2. Verfahren nach Anspruch 1, **dadurch gekennzeichnet, dass** von mobilen Geräten (25) in der Nähe des Fahrzeugs (3) ausgesandte Funkdaten (23, 24) empfangen werden und dass die Daten abhängig von einem Inhalt und/oder einem Umfang der Funkdaten (23, 24) zur Anzeige an den Seitenflächen (4) ausgewählt werden.

3. Verfahren nach einem der vorhergehenden Ansprüche, **dadurch gekennzeichnet, dass** dem Fahrzeug (3) seitlich benachbarte Objekte und/oder Abstände zu dem Fahrzeug (3) seitlich benachbarten Objekten ermittelt werden und dass die Daten (9, 10) abhängig von den Objekten und/oder den Abständen zur Anzeige an den Seitenflächen (4) ausgewählt werden.

4. Verfahren nach einem der vorhergehenden Ansprüche, **dadurch gekennzeichnet, dass** erfasst wird, wie viele Male bestimmte Daten (9, 10) bereits angezeigt werden, und dass die Daten (9, 10) abhängig von der Anzahl von Malen zur Anzeige an den Seitenflächen (4) ausgewählt werden.

5. Verfahren nach einem der vorhergehenden Ansprüche, **dadurch gekennzeichnet, dass** das Wetter an der Position des Fahrzeugs (3) ermittelt wird und dass die Daten (9, 10) abhängig von dem Wetter zur Anzeige an den Seitenflächen (4) ausgewählt werden.

6. Verfahren nach einem der vorhergehenden Ansprüche, **dadurch gekennzeichnet, dass** die Daten (9, 10) abhängig von dem Zeitpunkt und/oder der Tageszeit und/oder dem Wochentag und/oder dem Monat und/oder der Jahresszeit zur Anzeige an den Seitenflächen (4) ausgewählt werden.

7. Verfahren nach einem der vorhergehenden Ansprüche, **dadurch gekennzeichnet, dass** die Daten (9, 10) aus einer Datenbank ausgewählt werden, die auf dem Fahrzeug (3) installiert ist.

8. Verfahren nach einem der Ansprüche 1 bis 6, **dadurch gekennzeichnet, dass** die Daten (9, 10) aus einer externen Datenbank (28) ausgewählt werden, mit der drahtlos kommuniziert wird.

9. Fahrzeug (3) zur Durchführung des Verfahrens nach einem der vorhergehenden Ansprüche, mit
- in einander entgegengesetzte Richtungen (6 und 7) weisenden Seitenflächen (4),
- Anzeigeeinrichtungen (11) für Daten (9, 10) an den Seitenflächen (4), so dass die Daten (9, 10) für einen Betrachter des Fahrzeugs (3) von außen sichtbar sind,
- einer Positionsbestimmungseinrichtung, die zum Ermitteln der aktuellen Position des Fahrzeugs (3) ausgebildet ist,
- einer Ausrichtungsbestimmungseinrichtung, die zum Ermitteln der aktuellen Ausrichtung des Fahrzeugs (3), die beim geradeaus vorwärts Fahren gleich seiner Fahrtrichtung ist, ausgebildet ist, und
- einer Steuereinrichtung (27), die zum Auswählen der Daten (9, 10) abhängig von der aktuellen Position und der aktuellen Ausrichtung des Fahrzeugs (3) ausgebildet ist,
**dadurch gekennzeichnet, dass** die Steuereinrichtung (27) ausgebildet ist, um die Daten (9, 10) zur Anzeige an der jeweiligen Seitenfläche (4) abhängig davon auszuwählen, ob sich die jeweilige Seitenfläche (4) links oder rechts an dem Fahrzeug (3) befindet, wobei die Steuereinrichtung (27) ausgebildet ist, um unterschiedliche Daten (9, 10) auf der Anzeigeeinrichtung (11) und der weiteren Anzeigeeinrichtung (11) anzuzeigen.

10. Fahrzeug (3) nach Anspruch 9, **dadurch gekennzeichnet, dass** ein Empfänger (21, 22) vorgesehen ist, der ausgebildet ist, um von mobilen Geräten (25) in der Nähe des Fahrzeugs (3) ausgesandte Funkdaten (23, 24) zu empfangen, und dass die Steuereinrichtung (27) ausgebildet ist, um die Daten (9, 10) abhängig von einem Inhalt und/oder einem Umfang der Funkdaten (23, 24) zur Anzeige an den Seitenflächen (4) auszuwählen.

11. Fahrzeug (3) nach einem der Ansprüche 9 und 10, **dadurch gekennzeichnet, dass** eine Sensoreinrichtung vorgesehen ist, die ausgebildet ist, um dem Fahrzeug (3) seitlich benachbarte Objekte und/oder Abstände zu dem Fahrzeug (3) seitlich benachbarten Objekten zu ermitteln, und dass die Steuereinrichtung (27) ausgebildet ist, um die Daten (9, 10) abhängig von den Objekten und/oder den Abständen zur Anzeige an den Seitenflächen (4) auszuwählen.

12. Fahrzeug (3) nach einem der Ansprüche 9 bis 11, **dadurch gekennzeichnet, dass** die Steuereinrichtung (27) dazu ausgebildet ist, drahtlos mit einer externen Datenbank (28) zu kommunizieren, um die Daten (9, 10) auszuwählen.
